(19) Europäisches Patentamt
European Patent Office
Office européen des brevets

(11) Publication number : **0 529 872 A1**

(12) # EUROPEAN PATENT APPLICATION

(21) Application number : **92307360.5**

(22) Date of filing : **12.08.92**

(51) Int. Cl.[5] : **C08J 9/36,** C08J 7/04, B32B 5/18, B32B 25/20, // C08L83/04

(30) Priority : **21.08.91 GB 9118052**

(43) Date of publication of application : **03.03.93 Bulletin 93/09**

(84) Designated Contracting States : **DE FR GB**

(71) Applicant : **Dow Corning Limited
Cardiff Road Barry
South Glamorgan CF6 7YL Wales (GB)**

(72) Inventor : **Winnan, Hewart Wheatley
7 Wordsworth Avenue
Penarth, South Glamorgan, Wales (GB)**

(74) Representative : **Bullows, Michael et al
Dow Corning Limited Cardiff Road
Barry South Glamorgan CF6 7YL Wales (GB)**

(54) **Foam coated with silicone rubber.**

(57) A foam is coated with silicone rubber. The silicone rubber is an oxime cured room temperature vulcanizing (RTV) grade highly filled with hydrated alumina. The coating may be applied to the foam by any convenient means and a thickness of the order of about 0.3mm is suitable for most applications. The coated foam is flame retardant and may be used as an insulating material for aircraft.

EP 0 529 872 A1

This invention is directed to a foam which is coated with a flame retardant silicone rubber. The silicone rubber coated foam is of general utility as an insulation material, but is particularly suitable for use as an insulating material for aircraft because of its flame retardant characteristics.

Polyurethane foam has been used as an insulating material for many years. However, some polyurethane foam systems suffer from the disadvantage that they are known to produce toxic gases when subjected to heat. There is therefore an obvious need for a safer alternative material for use as insulation. This need is especially critical in the case of aircraft where passengers have limited opportunity for escape. Insulation for use in aircraft must comply with the Civil Aviation Authority (CAA) Specification No. 8 Issue 3, which regulates the flammability of foams and other materials used in aircraft. The CAA Specification requires that a material pass a "vertical burning test" in a gas flame having a minimum temperature of 840°C. While foams containing hydrated alumina as a filler are known to have excellent flame retardant properties sufficient to satisfy the requirements of the CAA Specification, such foams possess densities of the order of 200 to 250 kg/m$^3$ which exceeds the weight criteria necessary for use in aircraft applications.

E.P. 167 307 discloses a curable silicone composition for the protection of polyurethane foam against UV light, water penetration and mechanical damage. The silicone compositions disclosed are multi component materials which comprise selected organosilicon resin, hydroxyl end-blocked polydiorganosiloxane, organotin catalyst and filler, for example quartz, aluminium oxide, aluminium silicate, zirconium silicate, magnesium oxide, zinc oxide, talc diatomaceous earth, iron oxide, calcium carbonate, clays, titania, zirconia, mica, glass, sand, carbon black, graphite, barium sulphate, zinc sulphate, wood flour, cork or fluorocarbon polymer powder. Preferred fillers are carbon black and titania but not silicas in view of the requirement for opacity to UV radiation. Crosslinkers may be employed, for example alkylalkoxysilanes, alkylacetoxysilanes and alkyloximosilanes.

E.P. 123 487 discloses a method of manufacturing an improved electrical high voltage insulator which involves applying and curing a one-part, room temperature curable silicone composition to the surface of an insulator, the insulator surface having a minimum designated arc resistance. The silicone composition is the product obtained by mixing in the substantial absence of moisture a specified polydimethylsiloxane fluid containing hydroxyl radicals, finely divided aluminium hydroxide filler, a silane of the formula $R_bSi(On{=}X)_{4-b}$ and an optional condensation catalyst. The composition cures on exposure to atmospheric moisture to produce a coating on the insulator that resists the development of leakage currents and flashover failure upon exposure to electrical stress, moisture, contamination and other outdoor weathering stresses.

J.P. 62/263255 discloses a room temperature setting organopolysiloxane composition containing (a) 100 parts weight of dihydroxy organopolysiloxane having a viscosity of 20 to 1,000,000 cps at 25°C, (b) 10 to 300 parts weight of aluminium hydroxide and/or magnesium hydroxide, (c) 0.5 to 20 parts weight of organotitanium compound and (d) 0.5 to 30 parts weight of organosilicon compound, having at least two hydrolysable groups e.g. methyl methyltrimethoxysilane in its molecule and silica. The compositions are suitable for sealing, coating and adhesives and have improved workability and storage stability without affecting flame retardancy. In an example there are used 100 parts weight of dimethylpolysiloxane having hydroxy groups at both chain terminals (viscosity 50,000 cps. at 25°C), 50 parts weight of dimethylpolysiloxane having trimethylsiloxy terminals (viscosity 1,000 cps. at 25°C), 5 parts weight of di-n-butoxytitanium bisethylacetoacetate and 150 parts weight of aluminum.

It has now been found that one can provide an insulation material which satisfies the CAA Specification for flame retardancy and also possesses a low density of the order of about 110 kg/m$^3$ which satisfies the weight criteria necessary for a material to be acceptable in aircraft applications.

The invention provides in one of its aspects an article comprising a foam coated with a silicone rubber formed from an oxime cured room temperature vulcanizing (RTV) grade highly filled with hydrated alumina.

Preferably the coating of silicone rubber is formed by use of a one-package, room temperature curable silicone composition which comprises the product obtained by mixing in the substantial absence of moisture (A) from 45 to 70 percent by weight of (1) 100 parts by weight of polydimethylsiloxane fluids of the formula $Y(Me_2SiO)_aH$ in which Y is a methyl or hydroxyl group, at least 85 percent of Y are hydroxyl radicals, a has an average value such that the viscosity is in the range of from 5 to 20 Pa.s at 23°C and Me is methyl radical, and (2) from 10 to 30 parts by weight of silane of the formula $R_bSi(ON{=}X)_{4-b}$ in which R is selected from the group consisting of monovalent hydrocarbon radicals and monovalent halohydrocarbon radicals, X is selected from the group consisting of $R_2'C{=}$ and

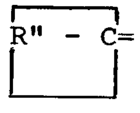

radicals in which R′ is selected from the group consisting of monovalent hydrocarbon radicals and monovalent halohydrocarbon radicals and R″ is selected from the group consisting of divalent hydrocarbon radicals and divalent halohydrocarbon radicals and b is an integer from 0 to 1 inclusive, (B) from 30 to 55 percent by weight of aluminium hydroxide having an average particle size of less than 5 micrometres.

The polydimethylsiloxane fluid (1) can be a mixture of fluids having different end-blocking arrangements in that both ends can be hydroxyl, or one end can be methyl and one can be hydroxyl. The polydimethylsiloxane fluid can also contain small amounts of cyclic materials and monomethylsiloxane units such as are found in commercial production of polydimethylsioxane fluids. The polydimethylsiloxane fluid can have the methyl radical on the polymer chain replaced with other radicals in very small amounts such as impurities found in commercial materials but the preferred fluid contains only methyl radicals.

Part (A) of the silicone coating composition can also contain up to 100 parts by weight of a polydimethylsiloxane fluid (3) of the formula $Me(Me_2SiO)_cSiMe_3$ in which c preferably has an average value such that the viscosity is greater than 0.05 Pa.s at 23°C and Me is methyl radical. The amount of fluid added and its viscosity will have an effect upon the consistency of the silicone composition and the physical properties of the cured composition.

The silane (2) contains radicals R and R′ or R″. Each R and R′ can be a monovalent hydrocarbon radical or a halogenated monovalent hydrocarbon radical, for example an alkyl radical such as methyl, ethyl or isopropyl, an alkenyl radical such as vinyl or allyl or a halogenated monovalent hydrocarbon radical such a chloromethyl and 3,3,3-trifluoropropyl. Preferred R and R′ radicals are methyl and ethyl radicals. R″ can be a divalent hydrocarbon radical or divalent halohydrocarbon radical, for example

$$-CH_2(CH_2)_3\underset{\substack{|\\ Cl}}{CH}_2-,$$

$-CH_2CHCH_2CH_2CH_2-$ and $-CF_2(CF_2)_2CF_2-$. Methods of making the silanes used in this invention are disclosed in U.S. Patent No. 3,189,576 issued 15th June, 1965, which is hereby incorporated by reference to show methods for manufacture of the silane.

A preferred silane (2) is of the formula $R_bSi(ON{=}CR_2')_{4-b}$ in which each R and R′ are monovalent hydrocarbon radicals. The preferred R radicals are methyl, ethyl or vinyl with methyl radical most preferred. R′ radicals are preferably methyl or ethyl. The preferred silanes are methyltri(dimethylketoximo) silane and methyltri(methylethylketoximo)silane. The silane is used in an amount such that there is 5 to 30 parts by weight of silane per 100 parts by weight of polydimethylsiloxane fluid (1). Preferred compositions are produced using from 10 to 30 parts by weight of silane per 100 parts by weight of polydimethylsiloxane.

The silane (2) of the formula $R_bSi(ON{=}X)_{4-b}$ is suitable for use in coating compositions for use in this invention in spite of the fact that the composition contains aluminium hydroxide which contains about 35 percent by weight of hydroxyl radicals and yet the composition, which is moisture curable, maintains a useful shelf life of at least several months to preferably greater than 1 year. Use of the specified silanes with the hydroxyl containing polydimethylsiloxane allows the production of a one-package composition.

A condensation catalyst can be included to accelerate the rate of cure of the silicone coating composition on exposure to moisture. Preferably the condensation catalyst is a carboxylic acid salt of tin. Typical carboxylic acid salts include dibutyltindiacetate, stannous octoate, dibutyltindilaurate, dibutyltindioctoate and dibutyltindi-2-ethylhexoate. Catalyst proportions preferred are from 0.2 to 0.5 part by weight per 100 parts by weight of polydimethylsiloxane. Also permitted are ingredients such as pigments, other fillers in minor amounts and other ingredients commonly used in silicone compositions provided that the final composition is tested to ensure that these other additional ingredients do not degrade the cured coating.

The filler (B) used in the silicone coating compoition is aluminium hydroxide, also known as aluminium trihydrate or hydrated aluminium oxide. It is represented by the formula $Al_2O_3.3H_2O$. For use in this invention the aluminium hydroxide preferably has an average particle size of less than 5 micro-metres, preferably less than 1 micrometre. Because the particle size of the filler is small it can be more uniformly dispersed; the more completely it is dispersed in the composition the more uniform and homogeeous the silicone composition. The aluminium hydroxide is used in an amount of from 30 to 55 percent by weight based upon the sum of (A) and (B). It is preferred that the amount of aluminium hydroxide be from 40 to 55 percent by weight.

A non-reactive solvent can be used to thin the silicone coating composition to the viscosity preferred for certain application methods e.g. brushing, spraying or dipping. A dry solvent capable of dispersing the polydimethylsiloxane can be toluene, xylene, chlorothene, naphtha or white spirit.

The preferred one part room temperature curable silicone coating composition used in this invention can be prepared by mixing the ingredients together in the substantial absence of moisture. The silane is moisture

sensitive so that the mixture must be essentially absent of free moisture when the silane is added and maintained in the moisture free state until cure is desired, such as by storing it in a container which excludes moisture. A preferred method of mixing comprises mixing the aluminium hydroxide into the polydimethylsiloxane in a dough mixer by slowly adding the aluminium hydroxide to the polydimethylsiloxane while mixing. It is preferred to heat the polymer to a temperature of from 100°C to 200°C to aid in mixing the filler into the polymer. This heating step also removes any free water which may be present in the mixture. After the filler is completely dispersed in the polymer the mixture is cooled. If solvent is to be used in the composition the non-reactive solvent is then slowly admixed so that it combines with the mixture of polymer and filler and gradually thins it. The solvent should not contain free water. A preferred method of adding the silane and catalyst is to first heat the silane to about 70°C then stir in the catalyst until it is dissolved in the silane. The silane-catalyst mixture may then be added to the polymer-filler-solvent mixture in a mixing device which prevents contact with atmospheric moisture and the mixture is stirred until homogeneous.

Any type of foam can be treated in accordance wit h the present invention to provide a coated foam acording to the invention, including polyurethane, polyether, polyester and silicone foams. However, silicone foams are preferred. A preferred silicone based foamable composition can be formed by mixing ingredients comprising (a) one or more polysiloxanes having not less than three alkylhydrogensiloxane units per molecule, (b) one or more polysiloxanes having not less than two silicon-bonded hydroxyl groups per molecule, (c) one or more compounds having carbon-bonded hydroxyl groups present in a proportion to provide from 0 to 5% by weight of the composition, (d) a polyorganosiloxane comprising $[F(CF_2)_m(CH_2)_nO]_pSiO_{\frac{(4-p)}{2}}$, $R_3SiO_{½}$ and $SiO_{4/2}$ units and silicon-bonded hydroxyl groups wherein each R represents a monovalent hydrocarbon group containing from 1 to 20 carbon atoms, m is an integer having an average value from 1 to 20, n has the value 1 or 2, p has the value 1, 2 or 3 and (e) a noble metal catalyst for promoting reaction between the ingredients, the ingredients being present in the mixed composition in proportions such that the ratio of silicon-bonded hydrogen atoms of said one or more polysiloxanes having not less than three alkylhydrogensiloxane units per molecule to silicon-bonded hydroxyl groups and carbon-bonded hydroxyl groups of the other ingredients of the composition lies in the range 1:1 to 6:1.

Foamable silicone compositions may be provided in two parts which may have a similar viscosity one to the other to facilitate mixing of the parts of the composition. Preferably a two part composition is employed of which the two parts each have the same viscosity and this viscosity is less than 15,000 $mm^2/s$. Suitable compositions include those described in European Patent Specification 338 693. These compositions do not require a heating step to effect cure. They may be formulated to foam and cure within 120 seconds of mixing at 20°C to provide a cellular structure having a density of less than $150Kg/m^3$ and comprising a predominantly open cell structure with an integrally formed surface skin.

The foamable silicone composition preferably flows, foams and cures readily at ambient temperatures of the order of 15 to 25°C. These compositions are curable to form a polysiloxane matrix which is foamed by evolution of hydrogen gas in presence of a noble metal catalyst according to the scheme $\equiv SiH + HOQ \dashrightarrow \equiv SiOQ + H_2$.

Suitable polysiloxanes having alkylhydrogensiloxane units include polymers having units according to the general formula $R_qHSiO_{\frac{(3-q)}{2}}$ in which each R represents a lower alkyl or phenyl group e.g. a methyl group, and q is 1 or 2. The alkylhydrogen polysiloxanes may also comprise units $R_sSiO_{\frac{(4-s)}{2}}$ in which R is as referred to above and s is 1, 2 or 3. Reactions of the preferred compositions to generate hydrogen gas and to cure the mass through chain extension and crosslinking within the desired time span are dependant on the presence of appropriate proportions of the interactive substituents and the alkylhydrogen polysiloxane is selected accordingly. Preferably this polysiloxane has from 0.5% to 2.5% by weight of silicon-bonded hydrogen atoms. It is preferred that each R represents a methyl group (Me). Preferably terminal groups of the alkylhydrogen polysiloxane have the formula $R_3SiO_{½}$ where each R represents a methyl group. Suitable alkylhydrogen polysiloxanes include those comprising MeHSiO units with or without the presence of $Me_2SiO$ units and having viscosities of the order of from about 1 to about $100mm^2/s$ more preferably from about 10 to about $100mm^2/s$ at 25°C.

Suitable polysiloxanes having silicon-bonded hydroxyl groups are polymers which include units according to the general formula $R_r(OH)SiO_{\frac{(3-r)}{2}}$ in which each R represents a lower alkyl or phenyl group e.g. a methyl group and r is 1 or 2. These polysiloxanes also comprise units $R_2SiO_{\frac{(4-s)}{2}}$ in which R and s are as referred to above. These materials are preferably liquids and are chosen so that their functionality and chain length are appropriate to the viscosity required of the composition, the amount of hydrogen evolution and the degree of chain extension and crosslinking required during curing of the composition. The polysiloxanes having silicon-bonded hydroxyl groups are preferably silanol terminated polydiorganosiloxanes according to the general for-

mula $HO((R_2)SiO)_tH$ in which each R represents a methyl group and t has a value up to about 25 such that the polysiloxane has a viscosity of about 30 to about 60 $mm^2/s$. Preferably the one or more polysiloxanes having not less than two silicon-bonded hydroxyl groups per molecule also comprise longer chain silanol terminated polydiorganosiloxanes of the formula $HO(R_2)(SiO)_tH$ where each R is as aforesaid and t is an integer such that the polysiloxane has a viscosity of about 50 mm/s at 25°C.

One may also include in the composition appropriate quantities of higher functional materials as crosslinking agents. Suitable crosslinking agents include materials having three or more functional e.g. hydroxy groups per molecule. Preferred crosslinking agents include an alkoxy silane and/or a conden-sation product thereof capable of combining with three or more hydroxy polysiloxane molecules with release of the corresponding alcohol of the alkyd radicals, e.g. methyl trimethoxysilane, n-propylorthosilicate and ethyl polysilicate.

The foamable silicone composition may also include one or more compounds having carbon-bonded hydroxyl groups. This component (c) influences the structure of foams formed and has a significant influence on lowering the density of the cured foam. Suitable materials include the aliphatic and araliphatic alcohols and especially lower aliphatic monofunctional alcohols having up to 8 carbon atoms, e.g. methanol, n-propyl alcohol and benzyl alcohol. The component (c) is preferably present to an extent of up to 5% by weight of the composition as a whole. Its presence contributes to low density properties of the foams produced, but including too large a proportion of it leads to a reduction in the ability of the composition to cure satisfactorily.

The component (d) is a polyorganosiloxane comprising $[F(CF_2)_m(CH_2)_nO]_pSiO_{\frac{(4-p)}{2}}$, $R_3SiO_{1/2}$, $SiO_{4/2}$ units and silicon-bonded hydroxyl groups wherein each R represents a monovalent hydrocarbon group containing from 1 to 20 carbon atoms, m is an integer having an average value of from 1 to 2, n has the value 1 or 2 and p has the value 1, 2 or 3. This polysiloxane may also include from 0 to 10 percent, based on the weight of said polyorganosiloxane, of $GSiO_{3/2}$ units wherein G represents the residue obtained by removing the hydrogen atom from a hydroxyl group of a linear organic polymer selected from the group consisting of homopolymers of ethylenically unsaturated alcohols, copolymers of these alcohols with ethylenically unsaturated hydrocarbons, polyethers and polyoxyalkylene glycols wherein said organic polymer contains an average of at least one terminal hydroxyl group per molecule. These materials are more fully described in European Patent Specification 179 598. In preferred polyorganosiloxanes (d), the molar ratio of $R_3SiO_{1/2}$ units to the total number of $[F(CF_2)_m(CH_2)_nO]_pSiO_{\frac{(4-p)}{2}}$, $SiO_{4/2}$ units and $GSiO_{3/2}$ units is from 0.3 to 1.3. Preferably m represents an even integer and the average value of m is 8, n is 2 and p is 1. Suitable polyorganosiloxanes (d) include those in which the concentration of $[F(CF_2)_m(CH_2)_2]_pSiO_{\frac{(4-p)}{2}}$ units is sufficient to impart a surface tension of less than $2.2 \times 10^{-4}$ newtons per centimetre at 25°C to a 10% by weight solution of said polyorganosiloxane in a hydroxyl endblocked polydimethylsiloxane exhibiting a viscosity of 0.08$mm^2/s$ at 25°C.

The preferred components (d) are the products of treatment of hexamethyldisiloxane coated polysilicates treated with the alcohol $F(CF_2)\text{-}_8CH_2CH_2OH$ to react with some at least of the silicon-bonded hydroxyl groups of the polysilicate. The pref-erred components (d) are polydiorganosiloxanes having minor amounts (e.g. up to 3%, preferably less than 1% by weight) of silicon-bonded hydroxyl groups which contribute to the total silicon-bonded hydroxyl groups of the composition.

The noble metal catalyst (c) may be for example a rhodium catalyst but is preferably a platinum catalyst. Platinum catalysts may take any of the known forms, ranging from platinum as deposited on carriers such as silica gel or powdered charcoal, to platinic chloride, salts of platinum and chloroplatinic acids. A preferred form of platinum is chloroplatinic acid either as the commonly obtainable hexahydrate or the anhydrous form, on account of its easy dispersibility in organosilicon systems and its non-effect on colour of the mixture.

The silicone rubber is preferably applied to the foam structure to form a smooth, coherent coating. The coating may be applied to the foam by any conventional method e.g. dipping, brushing or spraying and it has been determined that a thickness of the order of not less than 0.25mm, e.g. about 0.3mm is suitable for most applications.

Foam can be coated by slowly rotating the foam while dipping it into a bath of the silicone rubber forming composition. After a uniform coating is formed over the surface of the foam the foam is withdrawn from the bath and rotation is continued in the air while the solvent evaporates until the surface of the coating becomes thick enough to prevent flow of the coating over the foam surface. The coated foam is then suspended in the atmosphere until the coating is completely dry, cured and bonded to the foam. This method produces a smooth, uniform coating. The foam can also be coated by brushing or spraying in the conventional manner, making certain that the coating is as smooth and uniform as possible. A wet, solvent containing coating should be at least 0.3mm thick at all points to ensure adequate protection to the foam. A coating of this thickness of the preferred coating composition cures to a handleable degree in about 24 hours under normal atmospheric

conditions with a complete cure by 7 days. The cured coating should be at least 0.25mm thick and bonded to the foam.

Thus the invention extends to the use of the selected silicone rubber to form a flame retardant coating on a foam and is particularly useful when a one-part composition is applied as a coating to silicone foam.

The invention provides in another of its aspects a method of treating foam to provide a flame retardant coating thereon which comprises curing on the surface of the foam a coating of a silicone rubber which is an oxime cured room temperature vulcanizing (RTV) grade highly filled with hydrated alumina.

Coated foams according to the present invention demonstrate good flame retardant properties and may be of low density. Those which employ a silicone foam also avoid the toxic by-products produced by burning certain polyurethane foams. Further, the invention provides a way to use low density silicone foams to provide good flame retardant insulating materials and good mechanical strength due to the presence of the coating.

The following example illustrates the invention. All parts are by weight unless otherwise specified.

Example 1

A silicone foam forming composition was prepared comprising two parts A and B for admixture in a ratio of 1:1. The part A comprised two $\alpha$,w dihydroxy polysiloxanes namely 28 parts of a first $\alpha$,w dihydroxy polydimethylsiloxane having a viscosity of about 42 $mm^2/s$ at 25°C and 62 parts of a second $\alpha$,w dihydroxy polydimethylsiloxane having a viscosity of about 2000 $mm^2/s$ at 25°C, 3 parts n-propyl alcohol and 0.7 part chloroplatinic acid catalyst. The part B comprised 68 parts of the second $\alpha$,w dihydroxy polydimethylsiloxane, 26 parts of trimethylsiloxy endblocked methyl hydrogen polysiloxane having a viscosity of about 30 $mm^2/s$ at 25°C and 6 parts of a surfactant. The surfactant was prepared in a glass reactor equipped with a thermometer, reflux condenser, mechanically driven stirrer and Dean-Stark apparatus to retain a portion of the condensate returning to the reactor, from 123 parts of a 70% solution in xylene of a resinous siloxane copolymer, 10.0 parts of an alcohol having the average formula $F(CF_2)_8CH_2CH_2OH$, 66 parts of xylene, 0.5 part of a solution of potassium hydroxide in ethanol and two parts of an acid clay. The siloxane copolymer consisted essentially of repeating units of the formulae $(CH_2)_3SiO_{1/2}$ and $SiO_{4/2}$ in a molar ratio of about 0.75:1.0 respectively and contained about 0.5% by weight of silicon-bonded hydroxyl groups. The contents of the reactor were heated at the boiling point for one hour, then cooled to 50°C and neutralised by bubbling carbon dioxide through the reaction mixture. The resultant mixture was then combined with 100 parts of a trimethylsiloxy endblocked polydimethylsiloxane exhibiting a viscosity of 10 $mm^2/s$ and a surface tension of 2.03 x $10^{-4}$ newtons/cm and the volatile materials were then evaporated under reduced pressure. The resultant clear solution exhibited a surface tension of 1.92 x $10^{-4}$ newtons/cm and contained a polyorganosiloxane with units of the average formula $F(CF_2)_8CH_2CH_2OSIO_{3/2}$, $(CH_3)_3SiO_{1/2}$ and $SiO_{4/2}$ having about 2.48% silicon-bonded hydroxyl groups.

Portions of the parts A and B were mixed in a ratio of 1:1, stirred with a spatula for 10 seconds and cast to form specimens of foam 305 x 70 x 13mm. The composition cured in 30 seconds to provide a resilient foam having uniform fine cells and having a density of 96kg/$m^3$. Each specimen was then spray coated using a Binks Bullows spray gun with a silicone rubber coating composition.

The coating composition was an oxime cured room temperature vulcanising grade of silicone rubber highly filled with aluminium. The compositions comprised the product obtained by mixing in the substantial absence of moisture 100 parts by weight of polydimethylsiloxane fluid of the formula $HO(Me_2SiO)_aH$ in which a has an average value such that the viscosity is about 5 to 20 Pa.s at 23°C and Me is methyl radical, 20 parts of a mixture of 2 parts methyltri(ethylmethylketoxime)silane and 1 part di(ethylmethylketoxime)methoxymethylsilane, 133 parts of aluminium hydroxide having an average particle size of less than 5 micrometres and 1 part dibutyltin di-2-ethylhexoate in 72 parts naphtha solvent and 15 parts white spirit. 6 specimens were prepared with an average coating thickness of 0.18mm and a further 6 specimens with an average coating of 0.25mm. Specimens were tested to CAA8 specification with the results shown below.

| Sample Ref. | Coating Thickness (av.) in mm | | CAA8 Burn Test Results: Burn length mm | Combined Flame + Glowing Time(s) |
|---|---|---|---|---|
| A | 0.20 | | 35 | 35 |
| B | 0.18 | | >30 | 40 |
| C | 0.17 | .18 mean | 42 | 47 |
| D | 0.17 | | 48 | 40 |
| E | 0.18 | | 36 | 39 |
| F | 0.19 | | 31 | 37 |
| G | 0.31 | | 10 | 0 |
| H | 0.27 | | 15 | 2 |
| I | 0.24 | .27 mean | 5 | 0 |
| J | 0.26 | | 5 | 0 |
| K | 0.31 | | 5 | 6 |
| L | 0.25 | | 0 | 0 |

The improvement in resistance to burning by increasing average coating thickness from 0.18 to 0.27 is shown in this data. Increasing the coating thickness beyond 0.27mm is not necessary as the combined burn and glowing times (i.e. time after removal of heat source) were frequently zero.

Calculations show that a "typical" foam panel for use on aircraft and of dimensions 182 x 61 x 10cm would increase in density by 10% due to the addition of a coating of silicone rubber of average thickness 0.27mm. Foam density is 100kg/m$^3$ and increasing this to 110kg/m$^3$ is acceptable in that industry.

Details of the CAA test requirements used in Example I are shown below.

FOAM TEST DATA

Foam density : approximately 100kg/cu.m (61b/cu.ft)

Burning Characteristics to CAA8 Specification:

| | | |
|---|---|---|
| Test configuration | : | Vertical |
| Specification details | : | |
| Burn length | : | 200mm (8 in) max. |
| Combined flame and glowing time | : | 15 seconds (max) after removal of flame |
| Specimen size | : | 305mm x 70mm x 13mm |
| Flame exposure time | : | 12 seconds |
| Flame height | : | 38mm (1½ in) |
| Length of specimen in flame | : | 19mm (¾ in) |
| Flame temperature | : | Minimum 840°C |

## Claims

1. An article comprising a foam coated with a silicone rubber formed from an oxime cured room temperature vulcanizing (RTV) grade highly filled with hydrated alumina.

2. An article according to Claim 1 wherein the foam is a silicone foam.

3. An article according to Claim 2 in which the foam is a silicone based foamable composition formed by mixing ingredients comprising (a) one or more polysiloxanes having not less than three alkylhydrogensiloxane units per molecule, (b) one or more polysiloxanes having not less than two silicon-bonded hydroxyl groups per molecule, (c) one or more compounds having carbon-bonded hydroxyl groups present in a proportion to provide from 0 to 5% by weight of the composition, (d) a polyorganosiloxane comprising $[F(CF_2)_m(CH_2)_nO]_pSiO_{\frac{(4-p)}{2}}$, $R_3SiO_{1/2}$ and $SiO_{4/2}$ units and silicon-bonded hydroxyl groups wherein each R represents a monovalent hydrocarbon group containing from 1 to 20 carbon atoms, m is an integer having an average value from 1 to 20, n has the value 1 or 2, p has the value 1, 2 or 3 and a noble metal catalyst for promoting reaction between the ingredients, the ingredients being present in the mixed composition in proportions such that the ratio of silicon-bonded hydrogen atoms of said one or more polysiloxanes having not less than three alkylhydrogensiloxane units per molecule to silicon-bonded hydroxyl groups and carbon-bonded hydroxyl groups of the other ingredients of the composition lies in the range 1:1 to 6:1.

4. An article according to any one of Claims 1 to 3 in which the silicone rubber is formed from the product obtained by mixing in the substantial absence of moisture, (A) from 45 to 70 percent by weight of (1) 100 parts by weight of polydimethylsiloxane fluid of the formula $Y(Me_2SiO)_aH$ in which Y is methyl or hydroxyl radical, at least 85 percent of Y are hydroxyl radicals, a has an average value of such that the viscosity is in the range of from 5 to 20 Pa.s at 23°C and Me is methyl radical, and (2) from 5 to 30 parts by weight of silane of the formula $R_bSi(ON{=}X)_{4-b}$ in which R is selected from the group consisting of monovalent hydrocarbon radicals and monovalent halohydrocarbon radicals, X is selected from the group consisting of $R_2'C{=}$ and

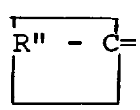

radicals in which R′ is selected from the group consisting of monovalent hydrocarbon radicals and monovalent halohydrocarbon radicals and R″ is selected from the group consisting of divalent hydrocarbon radicals and divalent halohydrocarbon radicals and b is an integer from 0 to 1 inclusive, (B) from 30 to 55 percent by weight of aluminium hydroxide having an average particle size of less than 5 micrometres and the sum of (A) and (B) being 100 percent, (C) optionally, a non-reactive solvent, the product being storage stable in containers which exclude moisture, but which cures when exposed to moisture.

5. An article according to Claim 4 in which (A) also contains up to 100 parts by weight of a polydimethylsiloxane fluid (3) of the formula $Me(Me_2SiO)_cSiMe_3$ in which c is an average value such that the viscosity is in the range of from 5 to 20 Pa.s at 23°C and Me is methyl radical.

6. An article according to Claim 4 or Claim 5 in which the polydimethylsiloxane fluid (1) has a viscosity in the range from 10 to 15 Pa.s at 23°C, the amount of (B) is in the range from 40 to 55 percent by weight and the mixture (A) also contains a condensation catalyst consisting of a carboxylic acid salt of tin.

7. An article according to any one of Claims 4, 5 and 6 in which the silane is of the formula $R_bSi(ON{=}CR_2')_{4-b}$ in which R and R′ are each monovalent hydrocarbon radicals.

8. An article according to any one of Claims 4 to 7 in which the product obtained by mixing (A) and (B) is dispersed in a non-reactive solvent to yield a homogeneous mixture.

9. A method of treating foam to provide a flame retardant coating thereon which comprises curing on the surface of the foam a coating of a silicone rubber which is an oxime cured room temperature vulcanizing (RTV) grade highly filled with hydrated alumina.

**10.** A method according to Claim 9 in which the silicone rubber is as set forth in any one of Claims 4 to 8.

**11.** A method according to Claim 9 in which the foam is as set forth in either one of Claims 2 and 3.

**12.** A method according to any one of Claims 9, 10 and 11 wherein a one-package, room temperature curable silicone composition is applied to the foam by dipping, brushing or spraying and the silicone rubber is exposed to atmospheric moisture for a time sufficient to cure the silicone rubber to produce an elastomeric coating of at least 0.25mm thickness bonded to the foam.

European Patent Office

# EUROPEAN SEARCH REPORT

Application Number

EP 92307360.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP - A - 0 123 487 (DOW CORNING CORPORATION) * Claims * -- | 1,4-10,12 | C 08 J 9/36<br>C 08 J 7/04<br>B 32 B 5/18<br>B 32 B 25/20//<br>C 08 L 83/04 |
| A | US - A - 4 681 808 (LEFLER, III) * Claims; column 3, line 35 * -- | 1,3,6,11 | |
| A | EP - A - 0 157 580 (LOCTITE CORPORATION) * Claim 1 * -- | 1 | |
| A | PATENT ABSTRACTS OF JAPAN, unexamined applications, M field, vol. 13, no. 310, July 14, 1989 THE PATENT OFFICE JAPANESE GOVERNMENT page 36 M 850 * no. 1-97 610 (MATSUSHITA ELECTRIC. IND. CO. LTD.) * ---- | 1,2 | **TECHNICAL FIELDS SEARCHED (Int. Cl.5)**<br>C 08 J<br>B 32 B<br>C 08 L 83/00 |

The present search report has been drawn up for all claims

| Place of search | Date of completion of the search | Examiner |
|---|---|---|
| VIENNA | 17-11-1992 | WEIGERSTORFER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)